(19) Europäisches Patentamt
European Patent Office
Office européen des brevets

(11) Publication number: 0 163 472 B1

(12) # EUROPEAN PATENT SPECIFICATION

(45) Date of publication of patent specification: 03.04.91 (51) Int. Cl.5: G01N 27/26

(21) Application number: 85303543.4

(22) Date of filing: 20.05.85

(54) **Element for electrophoresis.**

(30) Priority: 18.05.84 JP 100261/84

(43) Date of publication of application: 04.12.85 Bulletin 85/49

(45) Publication of the grant of the patent: 03.04.91 Bulletin 91/14

(84) Designated Contracting States: CH DE FR GB LI SE

(56) References cited:
US-A- 4 012 560
US-A- 4 415 428

JOURNAL OF CHROMATOGRAPHY, vol. 57, no. 1, 22nd April 1971, pages 121-125, chrom. 5258; J.G. WILLIAMS et al.: "Limitations of the detergent-polyacrylamide gel electrophoresis method for molecular weight determination of proteins"

IND. CHIM. BEL., vol. 36, no. 9, September 1971, pages 679-688; R. DEGRAEF et al.: "Acrylamide-gel "disc" elektroforese"

(73) Proprietor: Director of the Finance Division Minister's Secretariat Science and Technology Agency
No. 2-2-1, Kasumigaseki
Chiyoda-ku Tokyo(JP)

(72) Inventor: Ogawa, Masashi
c/o Fuji Photo Film Co. Ltd. 3-11-46 Senzui
Asaka-shi Saitama(JP)
Inventor: Shiraishi, Hisashi
c/o Fuji Photo Film Co. Ltd. No. 210, Nakanuma
Minami-ashigara-shi Kanagawa(JP)

(74) Representative: Arthur, Bryan Edward et al
Withers & Rogers 4 Dyer's Buildings Holborn
London EC1N 2JT(GB)

EP 0 163 472 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

### BACKGROUND OF OF THE INVENTION

#### Field of the invention

This invention relates to an element for electrophoresis and a process for the preparation of the same, and more particularly relates to an element for electrophoresis suitably employable for determination of base sequence of DNA, RNA, their fragments and their derivatives.

#### Description of prior arts

In the method for determination of the base sequence of DNA, RNA, their fragments, and their derivatives according to the post-label method, the operation of slab electrophoresis using a polyacrylamide gel membrane has become essential. Since the study in the genetic engineering technology has advance recently, quick determination of the base sequence of DNA, etc. is highly desired.

The polyacrylamide gel membrane employable for the above purpose can be prepared by crosslinking polymerization of a monomer such as acrylamide and a two-functional crosslinking agent such as N,N'-methylenebisacrylamide under an oxygen-free condition in the presence of water and a polymerization catalyst. In the course of the preparation of the polyacrylamide gel membrane, a modifier such as urea or formamide is generally incorporated into the membrane.

Since the polymerization reaction for the preparation of polyacrylamide is a radical crosslinking polymerization as described above, the polymerization can be easily inhibited by the presence of oxygen. Therefore, the gel membrane should be prepared in the absence of oxygen. For this reason, a polyacrylamide gel membrane is generally prepared by a process involving: introducing an aqueous solution (gel-forming solution or gel solution) containing acrylamide, a crosslinking agent and a polymerization catalyst into a cell formed between two glass plates with a certain clearance (e.g., 0.3 - 1 mm); sealing the gel-forming solution from oxygen; and causing the crosslinking polymerization to prepare the desired gel membrane. This procedure employing glass plates are disadvantageous because the glass plate is easily breakable and rather heavy and careful handling is accordingly required. Thus, the above procedure employing the glass plates is difficultly utilized to prepare the polyacrylamide gel membrane in a mass scale.

The polyacrylamide gel membrane prepared as above is employed for electrophoresis in the manner such as described below.

The polyacrylamide gel membrane is vertically placed in the form of being sandwiched between the glass plates, and in the first place a pre-electrophoresis operation is carried out. Then, a certain amount of a sample ($^{32}P$-labeled DNA cleaved by Maxam-Gilbert method) is introduced into sample slots provided on the membrane, and electrophoresis is carried out. After the electrophoresis is carried out for a certain period of time (e.g., approx. 6 - 12 hours), one glass plate is removed carefully and the exposed gel membrane is covered with a polymer film such as poly(vinylidene chloride) for subjecting to autoradiographic process. The autoradiographic process is carried out by the following procedures: A radiographic film and an intensifying screen are superposed successively on the film covering the gel membrane, whereby exposing the radiographic film to the gel membrane at a low temperature (e.g., -80° C) for a certain period of time (e.g., approx. 10 - 20 hours). After the exposing procedure, the radiographic film is developed, and the resolved pattern reproduced on the film is studied for determination of the base sequence of DNA, etc.

Since the autoradiographic process requires a long period as described above, it has been desired that the operation period is shortened. Moreover, enhancement of resolution accuracy in the detection of the resolved pattern is desired.

It is known that the resolution accuracy can be enhanced by applying the autoradiographic process to the gel membrane in dry state. The procedure for drying the gel membrane can be carried out as follows. The gel membrane having been subjected to electrophoresis is immersed in 10% aqueous acetic acid solution so as to fix the resolved DNA cleavage products as well as to remove the modifier such as urea from the membrane. The adhesion between the glass plate and the gel membrane is weak or negligible, the gel membrane easily separates from the glass plate and floats in the solution. The separated gel membrane is carefully taken out, placed on a filter paper, and dried under reduced pressure. The membrane is thus dried and fixed onto the filter paper. The autoradiographic process applied to the dry membrane shows

highly enhanced resolution. However, the drying process has such drawbacks that the separation and drying stages require highly trained skill and careful handling and actually the membrane is sometimes broken in these stages.

## SUMMARY OF THE INVENTION

An object of the present invention is to provide an element for electrophoresis which is improved in the adhesion between the support and the polyacrylamide gel medium such as in the form of a membrane.

Another object of the present invention is to provide an element for electrophoresis which is substantially free from separation between the polyacrylamide gel medium and the support in the course of a stage for removing urea and a subsequent drying stage.

There is provided by the present invention an element for electrophoresis comprising the following three-layer structure laminated in the order:

(I) a support layer;

(II) an adhesive layer made from a methyl methacrylate macromonomer derivative and optionally up to 50 wt % of other polymers and additives; and

(III) a medium layer for electrophoresis comprising an aqueous polyacrylamide gel formed by crosslinking polymerization of an acrylamide compound and a crosslinking agent in the presence of water, and a compound containing at least one carbamoyl group serving as modifier.

The element for electrophoresis of the present invention comprises a three-layer structure in which the support layer and the medium layer are combined by means of a specific adhesive layer formed from a methyl methacrylate macromonomer derivative. This three-layer structure is hardly separated in the course of a variety of operations performed in the aforementioned drying stage. Accordingly, the medium (or membrane) is hardly broken in the handling. Further, no filter paper is needed in the autoradiographic process.

Moreover, the element for electrophoresis of the present invention can be prepared by forming an layer containing a methyl methacrylate macromonomer derivative on a horizontally placed support and subsequetnly forming the medium layer thereon. Therefore, the element for electrophoresis of the invention is advantageously prepared in a mass scale.

## DETAILED DESCRIPTION OF THE INVENTION

Examples of the support employable for the preparation of the element for electrophoresis of the present invention include a variety of polymer materials in the form of sheet (the term "sheet" includes a film and a plate). Examples of the polymer materials include polyethylene terephthalate, polycarbonate of Bisphenol A, polyvinyl chloride, vinylidene chloride - vinyl chloride copolymer, polymethyl methacrylate, polyethylene, polypropylene, cellulose acetate, and cellulose acetate propionate. Preferred is a polyethylene terephthalate sheet.

The support employed in the invention can be subjected to glow discharge treatment prior to the provision of the adhesive layer containing a methyl methacrylate macromonomer derivative.

The glow discharge treatment can be applied onto the support under such conditions that the surface of the support can be made hydrophilic. The glow discharge treatment for making a surface of a polymer material hydrophilic is already known. Accordingly, such known arts can be applied for the glow discharge treatment of the support.

The glow discharge treatment can be applied to another surface of the support. If the glow discharge treatment is applied to the reverse side surface, said surface can be advantageously combined with a glass plate without an adhesive in the case that the element for electrophoresis of the invention is to be tentatively arranged on a glass plate.

The support generally has a thickness in the range of approx. 50 to 500 $\mu$m, preferably approx. 70 to 300 $\mu$m.

On the support, the adhesive layer is provided.

The adhesive layer of the invention is prepared from a methyl methacrylate macromonomer derivative. The term of "macromonomer" generally means a polymerizable monomer containing a substituent of a relatively high molecular weight which has a certain repeating unit. The methyl methacrylate macromonomer derivative accordingly means a macromonomer containing a polymerizable methyl methacrylate derivative group in the molecular structure. In this macromonomer, the methyl methacrylate derivative group

is present in the form of a methyl methacrylate group-terminated type.

Representative methyl methacrylate macromonomers employable in the present invention can be prepared in the manner stated in the following synthesis examples. In the following synthesis examples, "part" and "%" mean "part by weight" and "% by weight", respectively.

Synthesis Example 1

Synthesis of methacrylate-terminated methyl methacrylate macromonomer

In a glass flask equipped with a stirrer, a reflux condenser, a dropping funnel, a thermometer and a nitrogen gas-inlet was introduced a mixture solvent of 17.5 parts of acetone and 82.5 parts of toluene. A mixture of 100 parts of methyl methacrylate (hereinafter referred to as MMA), 3.2 parts of thioglycolic acid (chain transfer agent, hereinafter referred to as TGA) and 3 parts of azobisisobutylonitrile (polymerization initiator, hereinafter referred to as AIBN) was continuously dropped into the flask over 3 hrs. under reflux with introduction of a nitrogen gas. The reaction mixture was further heated for 2 hrs. for completing the polymerization. Thus, a solution of a polymer having the following formula (I) was obtained. A precipitate was produced upon addition of n-hexane to a portion of the reaction mixture. The precipitate was dried under reduced pressure. An acid value of the precipitate was 0.340 mg•equivalent/g.

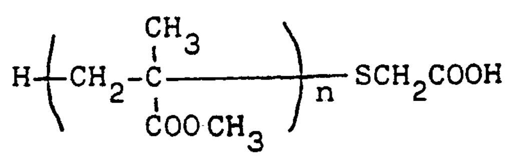 (I)

A portion of acetone was removed from the reaction mixture. To the reaction mixture were added 0.5 % of triethylamine (catalyst), 200 ppm of hydroquinone monomethylether (polymerization inhibitor) and glycidyl methacrylate in the amount of 1.3 times by mole as much as one mole of the acid. The resulting mixture was heated at 110°C for 4 hrs. The reaction ratio was 96 % (calculated value based on the decrease of the acid value).

The reaction mixture was then poured into n-hexane in the amount of 10 times in volume as much as the reaction mixture to produce a precipitate. The precipitate was dried under reduced pressure at 80°C to yield 95 parts of a macromonomer having the following formula (II).

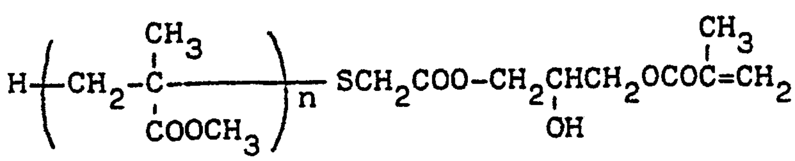 (II)

The molecular weight (value converted to polystyrene) of the resulting macromonomer was 2,840 (number average) and 6,470 (weight average) according to gel permeation chromatography (GPC) determination.

Synthesis Examples 2 - 6

The procedures of Synthesis Example 1 were repeated except that the amount of TGA (chain transfer agent) and the composition of the monomer were varied to give methacrylate-terminated methyl methacrylate macromonomers.

The amount of TGA and the composition of monomer employed in the synthesis examples as well as the number average molecular weight of the resulting methacrylate-terminated methyl methacrylate macromonomer are set forth in Table 1.

Table 1

| Synthesis Example | Monomer (part) | | Chain Transfer Agent (part) | | Macromonomer (number average MW) |
|---|---|---|---|---|---|
| 1 | MMA | 100 | TGA | 3.2 | 2,840 |
| 2 | MMA | 100 | TGA | 9.2 | approx. 1,000 |
| 3 | MMA | 100 | TGA | 1.8 | approx. 5,000 |
| 4 | MMA | 100 | TGA | 0.92 | approx. 10,000 |
| 5 | MMA | 98 | TGA | 3.2 | approx. 3,000 |
| | HEM | 2 | | | |
| 6 | MMA | 90 | TGA | 3.2 | approx. 3,000 |
| | HEM | 10 | | | |

Remarks: MMA: Methyl methacrylate
HEM: Hydroxyethyl methacrylate
TAG: Thioglycolic acid

The methyl methacrylate macromonomer derivative can be employed singly or in combination. Into the adhesive layer other polymers and additives can be incorporated, provided that the amount is not more than 50 wt.%. Examples of the incorporatable polymers and additives include diacetylcellulose, nitrocellulose, polyvinyl alcohol, polyacrylamide, polymethyl methacrylate, polyvinylidene chloride, and polyols such as glycerol.

The adhesive layer can be prepared by coating a solution of the methyl methacrylate macromonomer derivative or a composition containing the methyl methacrylate macromonomer derivative (i.e., coating solution) on the support, drying the coated layer, and forming on the layer an aqueous polyacrylamide gel medium-layer for electrophoresis by crosslinking. The coating solution can be prepared using an appropriate solvent. For example, water or an aqueous solvent containing an organic solvent can be employed as the solvent for a water-soluble or hydrophilic methyl methacrylate macromonomer derivative. An organic solvent or an organic solvent containing water can be employed as the solvent for a hydrophobic and water-insoluble solvent. Examples of the employable organic solvent include ketones such as acetone and methyl ethyl ketone; alcohols such as methanol and ethanol; N,N-dimethylformamide: dimethylsulfoxide; and ethers such as dimethyl ether and dioxane.

The adhesive layer preferably contains the methyl methacrylate macromonomer derivative in an amount of not less than 80 wt.%. More preferably, the adhesive layer consists essentially of the methyl methacrylate macromonomer derivative.

The addhesive layer generally has a thickness of approx. 0.1 to 3 $\mu$m, preferably approx. 0.2 to 2 $\mu$m.

The aqueous gel medium layer is now described in more detail.

The aqueous gel medium (may be referred to herein as "gel membrane") employed in the invention is a medium layer consisting essentially of an aqueous polyacrylamide gel formed by crosslinking polymerization of an acrylamide compound and a crosslinking agent in the presence of water.

For the preparation of the polyacrylamide gel membrane, an acrylamide compound and a crosslinking agent are dissolved or dispersed in water to prepare an aqueous solution or an aqueous dispersion, in which the crosslinking reaction is carried out to form an aqueous polyacrylamide gel membrane. Hereinafter, the term "dissovling (in water)" means to include both "dissolving (in water)" and "dispersing

(in water)", and the term "aqueous solution" means to include both "aqueous solution" and "aqueous dispersion", unless otherwise indicated. The term "aqueous medium" is used to include both a simple water as well as an aqueous mixture of water and an organic solvent, the organic solvent being optionally added.

Examples of the acrylamide compound employable in the present invention include acrylamide and its homologues such as N-methylacrylamide, N,N-dimethylacrylamide, N-(hydroxymethyl)acrylamide and diacetonacrylamide, and these compounds may be employed independently or in combination. Acrylamide is most preferable among these acrylamide compounds, and said acrylamide can be also preferably employed in combination with one or more of other acrylamide compounds.

As the crosslinking agent employable to obtain the polyacrylamide gel membrane of the invention, a known crosslinking agent described, for instance, in "Electrophoresis" 1981, 2 , 213-228 can be employed singly or in combination. Examples of the crosslinking agent include bifunctional compounds such as N,N'-methylenebisacrylamide (BIS), N,N'-propylenebisacrylamide (PBA), diacrylamide dimethylether (N,N'-oxydimethyleneacrylamide), 1,2-diacrylamide ethyleneglycol (DEG), 1,3-diacryloylethyleneurea, ethylene diacrylate (EDA), N,N'-diallyltartardiamide (DATD), and N,N'-bisacrylylcystamine (BAG). The crosslinking agent can be employed in the amount of approx. 2 to 30 wt.%, preferably approx. 3 to 10 wt.%, based on the total weight of the monomer (i.e., acrylamide compound) and the crosslinking agent. The gel concentration preferably is in the range of approx. 3 to 30 wt/v % (total weight of monomer and crosslinking agent per total volume of gel membrane comprising monomer, crosslinking agent and aqueous medium), the concentration being in accordance with the diffinition indicated by S. Hjerten in "Arch. Biochem. Biophys." 1 (Suppl.), 147 (1962).

As the modifier, a compound containg at least one carbamoyl group can be used. Examples of the modifier include urea and formamide. Urea is most preferred. The modifier can be used in an amount of approx. 40 to 60 wt.% based on the volume of the aqueous gel containing the monomer and crosslinking agent. In the case that urea is used as the modifier, the amount generally ranges from approx. 6 moles (approx. 360 g.) per one liter of the aqueous gel containing the monomer and crosslinking agent to the saturation amount, preferably from approx. 7 moles (approx. 420 g.) to the saturation amount.

A pH buffer agent can be contained in the polyacrylamide gel membrane of the invention. Any buffer agent which is able to buffer a solution to a range of pH 8.0 to 9.0, preferably pH 8.2 to 8.3 can be used. Buffer agents employable in the invention are described in publications such as "Chemistry Handbook, Fundamental Edition" compiled by The Chemical Society of Japan (Maruzen Ltd., Tokyo, 1966) pages 1312 - 1320; "Modern Electrophoresis" editted by Aoki & Nagai (Hirokawa Shoten, 1973), pages 320 - 322; "Data for Biochemical Research" compiled by R.M.C. Dawson et al., second edition (Oxford at the Clarendon Press, 1969) pages 476 - 508; "Biocemistry" 5 , 467 (1966); and "Analytical Biochemistry" 104, pages 300 - 310 (1966). Examples of the buffer agent include tris(hydroxymethyl)aminomethane (Tris), N,N-bis(2-hydroxyethyl)glycine (Bicine), N-2-hydroxyethylpiperazine-N'-2-hydroxypropane-2-sulfonic acid or its Na or K salt, N-2-hydroxyethylpiperazine-N'-2-hydroxypropane-3-sulfonic acid (HEPPSO) or its Na or K salt, N/tris-(hydroymethy)methyl/- 3-aminopropane-sulfonic acid (TAPS) or its Na or K salt; as well as an acid, an alkali, and a salt employable in combination with these compounds. Preferable examples of the buffer agent include Tris, boric acid-EDTA 2Na (pH 8.2).

The polyacrylamide gel membrane of the invention preferably contains a water-soluble polymer. As the water-soluble polymer, a water-soluble polymer of the addition polymerization type or condensation polymerization type can be used. Examples of the polymer of the addition polymerization type include non-ionic water-soluble polymers such as polyvinyl alcohol, polyvinyl pyrrolidone, and polyacrylamide. Examples of the polymer of the condensation polymerization type include non-ionic water-soluble polyalkylene glycols such as polyethylene glycol and polypropylene glycol. The water-soluble polymer of molecular weight ranging from approx. 10,000 to 1,000,000 is preferably used. Among these water-soluble polymers, polyacrylamide and polyethylene glycol are preferable. The water-soluble polymer is used in a range of approx. 2 to 100 wt.%, preferably, approx. 5 to 50 wt.%, based on the total weight of the monomer and crosslinking agent.

The addition of a water-soluble polymer serves to impart elasticity to the gel membrane, and thus modified gel membrane is still elastic even if it is dried. Thus, the gel membrane is so improved as to be free from the brittleness, whereby the gel membrane becomes hardly breakable. Further, the viscosity of the gel membrane can be controlled by selecting the molecular weight and amount of the water-soluble polymer.

The polyacrylamide gel membrane preferably contain agarose. There is no specific limitation on the agarose to be contained in the gel membrane, and any type of agarose such as low-electroendosmosis agarose, medium-electroendomosis agarose, or high-electroendomosis agarose can be used. Examples of

agarose employable in the invention include agaroses disclosed in Japanese Patent Provisional Publication Nos. 55(1980)-5730, 55(1980)-110946 (corresponding to USP 4,290,911 and GB 2 042 571A), 57(1982)-502098 (W0 82/02599, USP 4,319,976), etc. The amount of agarose to be added ranges from approx. 0.2 to 2 wt/v %, preferably from approx. 0.3 to 1.2 wt/v %, based on the volume of the aqueous gel containing the monomer and crosslinking agent. It becomes possible by the addition of agarose that the viscosity of the gel-forming solution can be controlled through changing the temperature of the solution, whereby suppressing flowability of the solution as well as facilitating the formation of the gel membrane.

The polyacrylamide gel membrane of the element of the invention is formed by radical crosslinking polymerization between the monomer such as acrylamide with the bifunctional compound (crosslinking agent) in an aqueous medium in which the water-soluble polymer and agarose are dissolved almost homogeneously. The gel is assumed to have a structure in which the water-soluble polymer and agarose are dispersed in the three dimensional crosslinked polymer formed by the reaction of the monomer and cross-linking agent, and the water-soluble polymer and agarose dispersed and further entangle with the three dimensional crosslinked polymer structure.

The crosslinking polymerization can be initiated by a known method, for instance, in the presence of a peroxide and/or under irradiation of ultra-violet rays. The reaction can be further accelerated by heat and irradiation with ultra-violet rays.

As the polymerization catalyst, a known low temperature-polymerization initiator such as those described in "Electrophoresis" 1981, 2 , 213 - 219, ibid. 1981, 2 , 220 -228; and "Modern Electrophoresis" editted by Aoki & Nagai (Hirokawa Shoten, 1973) can be used. Examples of the initiator include a mixture of β-dimethylaminopropionitrile (DMAP) and ammonium peroxodisulfate, a mixture of N,N,N',N'-tetramethylethylenediamine (TEMED) and ammonium peroxodisulfate, a mixture of TEMED and riboflavin, a combination of a mixture of TEMED, riboflavin and hydrogen peroxide, and irradiation with ultra-violet rays. The radical reaction initiator can be employed in the amount of approx. 0.3 to 5 wt. % preferably approx. 0.5 to 3 wt. %, based on the total amount of the monomer and crosslinking agent.

The polyacrylamide gel membrane of the invention may contain an oxidation inhibitor. The oxidation inhibitor can be chosen from various compounds heretofore known as oxidation inhibitors employable for the gel membrane for electrophoresis. Examples of the oxidation inhibitor include 1,4-dithiothreitol and 2-mercapto-ethanol.

A polyol compound such as glycerol or ethylene glycol can be contained in the polyacrylamide gel membrane of the element of the invention as a wetting agent. The polyol compound can be introduced in an amount of approx. 5 to 40 wt.% based on the volume of the aqueous gel membrane. Glycerol is particularly preferable among the polyol compounds. The addition of the wetting agent serves to keep the gel membrane from excessive dryness possibly caused by evaporation of water during storage of the medium, whereby preventing the medium from turning brittle or cracking caused by the excessive dryness. Thus, the improvement of physical properties of the gel membrane is accomplished.

In the case that the polyacrylamide gel membrane of the element of the invention can be prepared by a process in which a gel forming solution is coated by a known method on an electric insulation support having a smooth hydrophilic surface, and the gel forming solution is crosslinked to polymerization thereon.

In the case that the gel forming solution is crosslinked to polymerization on the surface of the support, the surface of the gel forming solution can be covered with a cover film, sheet, or plate. The same material as employable for the support can be employed as the cover film, sheet, and plate.

The gel membrane of the invention can be employed for the horizontal or vertical electrophoresis, disc electrophoresis, etc. by known methods described, for instance, in the aforementioned texts.

The medium for electrophoresis provided to the element of the present invention is strongly bound to the support through the provision of the specific adhesive layer. Accordingly, the element for electrophoresis of the present invention is always kept in the form of an integrated unit in the course of ordinary operations. For this reason, the complicated operations conventionally required in the electrophoresis for determination of base sequence of DNA, etc. can be simplified by the use of the element for electrophoresis according to the present invention. Moreover, the electrophoresis operation and dyeing operation can be performed by the integrated structure comprising the support and the gel membrane provided thereon.

The present invention will be more clearly understood with reference to the following examples.

ELEMENT 1

The methyl methacrylate macromonomer derivative in acetone set forth in Table 2 was coated on a

polyethylene terephthalate (PET) sheet (i.e., support) having been made hydrophilic by irradiation of ultraviolet rays and dried to approx. 110 °C to form an adhesive layer of approx. 0.5 µm thick (solid portion).

**Table 2: Composition of Coating Solution for the Formation of Adhesive Layer**

| Sample No. | Macromonomer Derivative | Concentration of Coating Solution (g/100 mℓ solvent) |
|---|---|---|
| 1 | P-1 (Product of Syn. Ex. 1) | 5 g. |
| 2 | P-2 (Product of Syn. Ex. 3) | 5 g. |
| 3 | P-3 (Product of Syn. Ex. 4) | 5 g. |
| 4 | P-4 (Product of Syn. Ex. 5) | 5 g. |

The adhesiveness between the PET sheet (support) and the macromonomer layer was evaluated by a cross-cut method. As a result, it was observed that the samples 1 to 4 (according to the present invention) were satisfactory in the adhesiveness.

On the adhesive layer provided on the support was formed a polyacrylamide gel membrane of 0.5 mm thick by coating an aqueous solution containing 11.87 g. of acrylamide, 0.63 g. of BIS, 42 g. of urea, 1.08 g. of tris(hydroxymethyl)aminomethane /CAS Registry No. 77-86-1/, 0.55 g. of boric acid, and 93 mg of EDTA Na salt in 100 ml. volume after addition of 1.3 ml of ammonium peroxodisulfate (5 weight %) and 33 µl. of TEMED, both being the polymerization initiator. Thus, an element for electrophoresis was obtained.

A comparison sample was prepared in the same manner except that the polyacrylamide gel membrane was formed directly on the PET sheet with no macromonomer layer.

The adhesiveness between the polyacrylamide gel membrane and the support in the element for electrophoresis was evaluated by pressing the gel membrane. As a result, it was observed that the samples 1 to 4 of the invention were satisfactory in the adhesiveness, while the comparison sample was poor in the adhesiveness.

EXAMPLE 2

The PET sheet provided with the macromonomer adhesive layer was prepared in the same manner as in Example 1 using the macromonomer set forth in Table 2 in Example 1. On the adhesive layer was formed a polyacrylamide gel membrane of 0.5 mm thick by coating an aqueous solution containing 11.87 g. of acrylamide, 0.63 g. of BIS, 0.3 g. of agarose (low electroendosmosis, gelatin temperature 36 °C), 2.5 g. of polyacrylamide, 42 g. of urea, 1.08 g. of tris(hydroxymethyl)aminomethane, 0.55 g. of boric acid, and 93 mg. of EDTA Na salt in 100 ml. volume after addition of 1.3 ml of ammonium peroxodisulfate (5 weight %) and 33 µl. of TEMED, both being the polymerization initiator. Thus, an element for electrophoresis was obtained.

A comparison sample was prepared in the same manner except that the polyacrylamide gel membrane was formed directly on the PET sheet with no macromonomer layer.

A test sample ($^{32}$P-DNA cleaved by Maxam-Gilbert method) was electrophoresed on the polyacrylamide gel membrane for sequencing the DNA. The element was then immersed in 10% aqueous acetic acid solution for 1 hour so as to remove the urea and fix the resolved substance to the membrane.

In the comparison sample, the gel membrane completely separated from the support immediately after the element was immersed in the solution.

In contrast, all of the gel membranes in the samples 1 to 4 (according to the present invention) were completely bound to the support during the immersing stage as well as after being subjected to the subsequent drying procedure.

The samples 1 to 4 were then subjected to the conventional autoradiographic process. No unsatisfactory results were observed in the autoradiographic process.

EXAMPLE 3

A polyacrylamide gel membrane was formed on the macromonomer adhesive layer of the PET sheet to prepare an element for electrophoresis in the same manner as in Example 2. Thus, four samples (samples 1 to 4) were obtained.

A comparison sample was prepared in the same manner except that the polyacrylamide gel membrane was formed directly on the PET sheet with no macromonomer layer.

The gel membrane was cut together with the support, and the cut face (section) of the gel membrane was observed. Partial separation of the gel membrane from the support was observed in the comparison sample, while no separation was observed in the samples 1 to 4 of the present invention. This means that the element for electrophoresis according to the invention can be cut with no unfavorable separation between the gel membrane and the support.

## Claims

**1.** An element for electrophoresis comprising the following three-layer structure laminated in the order:
(I) a support layer;
(II) an adhesive layer made from a methyl methacrylate macromonomer derivative and optionally up to 50 wt. % of other polymers and additives; and
(III) a medium layer for electrophoresis comprising an aqueous polyacrylamide gel formed by crosslinking polymerization of an acrylamide compound and a crosslinking agent in the presence of water, and a compound containing at least one carbamoyl group serving as modifier.

**2.** The element for electrophoresis as claimed in claim 1, in which said medium layer for electrophoresis contains a water-soluble polymer and agarose.

**3.** The element for electrophoresis as claimed in claim 1 or 2, in which said compound serving as modifier is urea or formamide.

**4.** The element for electrophoresis as claimed in claim 1 or 2, in which said support layer is made of a plastic material sheet.

**5.** The element for electrophoresis as claimed in claim 4, in which the plastic material sheet is a polyethylene terephthalate sheet.

**6.** The element for electrophoresis as claimed in claim 1, in which the adhesive layer consists essentially of a polymer made from a methyl methacrylate macromonomer derivative.

**7.** The element for electrophoresis as claimed in claim 1 or 7, in which the methyl methacrylate macromonomer derivative is a methyl methacrylate macromonomer having a methyl-methacrylate group at the terminal.

**8.** A process for the preparation of an element for electrophoresis which comprises forming on a support layer an intermediate layer containing a methyl methacrylate macromonomer derivative and forming on the intermediate layer an aqueous polyacrylamide gel medium layer for electrophoresis by crosslinking polymerization of an acrylamide compound and a crosslinking agent in the presence of water and a compound containing at least one carbamoyl group serving as modifier.

**9.** The process for the preparation of an element for electrophoresis as claimed in claim 8, in which said

medium layer for electrophoresis contains a water-soluble polymer and agarose.

10. The process for the preparation of an element for electrophoresis as claimed in claim 8, in which said compound serving as modifier is urea or formamide.

11. The process for the preparation of an element for electrophoresis as claimed in claim 8, in which the methyl methacrylate macromonomer derivative is a methyl methacrylate macromonomer having a methyl-methacrylate group at the terminal.

## Revendications

1. Elément pour l'électrophorèse caractérisé en ce qu'il comprend une structure en feuille à trois couches dans l'ordre suivant :
   I) une couche support,
   II) une couche adhésive constituée par un dérivé d'un macromonomère de méthyle méthacrylate, et le cas échéant par d'autres polymères et additifs à concurrence de 50 % en poids,
   III) une couche intermédiaire pour l'électrophorèse comprenant un gel de polyacrylamide aqueux formé par polymérisation par réticulation d'un composé acrylamide et d'un agent de réticulation, en présence d'eau, et un composé contenant au moins un groupement carbamoyl servant de modificateur.

2. Elément pour l'électrophorèse selon la revendication 1, caractérisé en ce que la couche intermédiaire de l'électrophorèse contient un polymère soluble dans l'eau, et de l'agarose.

3. Elément pour l'électrophorèse selon les revendications 1 ou 2, caractérisé en ce que le composé servant de modificateur est l'urée ou le formamide.

4. Elément pour l'électrophorèse selon les revendications 1 ou 2, caractérisé en ce que la couche support est faite d'une feuille en matière plastique.

5. Elément pour l'électrophorèse selon la revendication 4, caractérisé en ce que la feuille de matière plastique est une feuille de polyéthylène téréphtalate.

6. Elément pour l'électrophorèse selon la revendication 1, caractérisé en ce que la couche adhésive est constituée essentiellement d'un polymère fabriqué à partir d'un dérivé du méthyle méthacrylate macromonomère.

7. Elément pour l'électrophorèse selon les revendications 1 ou 7, dans lequel le dérivé du méthyle méthacrylate macromonomère est un méthyle méthacrylate macromonomère possédant un groupe terminal méthyle méthacrylate.

8. Procédé de préparation d'un élément pour l'électrophorèse qui inclut la formation sur une couche support d'une couche intermédiaire contenant un dérivé du méthyle méthacrylate macromonomère, et la formation sur la couche intermédiaire d'une couche constituée par un milieu aqueux d'un gel de polyacrylamide pour l'électrophorèse par polymérisation par réticulation d'un composé acrylamide et d'un agent de réticulation en présence d'eau et d'un composé contenant au moins un groupe carbamoyl servant de modificateur.

9. Procédé de préparation d'un élément pour l'électrophorèse selon la revendication 8, caractérisé en ce que la couche intermédiaire pour l'électrophorèse contient un polymère soluble dans l'eau et de l'agarose.

10. Procédé de préparation d'un élément pour l'électrophorèse selon la revendication 8, caractérisé en ce que le composé servant de modificateur est l'urée ou la formamide.

11. Procédé de préparation d'un élément pour l'électrophorèse selon la revendication 8 dans leqùel le dérivé du méthyle méthacrylate macromonomère est un méthyl méthacrylate macromonomère ayant

un groupe terminal méthyle-méthacrylate.

## Ansprüche

1. Ein Elektrophoreseelement, das die folgende Struktur, bestehend aus 3 Schichten, die wie folgt angeordnet sind, aufweist:
   (I) eine Stuetzschicht
   (II) eine Klebeschicht aus einem Methylmethacrylmakronomerderivat und gegebenenfalls weitere Polymere und Zusatzstoffe bis zu einem Gewichtsanteil von 50 %. und
   (III) eine ein Mittel fuer die Elektrophorese enthaltende Schicht, die ein waessriges Polyacrylamidgel aufweist, welches durch Polymerisation mit Netzverbindungen einer Acrylamidverbindung und einem eine Netzverbindung bildenden Mittel in der Gegenwart von Wasser gebildet ist, und eine Verbindung, die mindestens eine als Modifkationsmittel dienende Carbamoylgruppe enthaelt.

2. Das Elektrophoreseelement nach Anspruch 1, wobei diese ein Mittel fuer die Elektrophorese enthaltende Schicht ein wasserloesliches Polymer und Agarose enthaelt.

3. Das Elektrophoreseelement nach Anspruch 1 oder 2, wobei diese als Modifikationsmittel dienende Verbindung Urea oder Formamid ist.

4. Das Elektrophoreseelement nach Anspruch 1 oder 2, wobei diese Stuetzschicht aus einer Kunststoffolie besteht.

5. Das Elektrophoreseelement nach Anspruch 4, wobei die Kunststoffolie eine Polyethylenterephthalatfolie ist.

6. Das Elektrophoreseelement nach Anspruch 1, wobei die Klebeschicht im wesentlichen aus einem aus Methylmethacrylmakromonomerderivat hergestellten Polymer besteht.

7. Das Elektrophoreseelement nach Anspruch 1 oder 7, wobei das Methylmethacrylmakronomerderivat ein Methylmethacrylmakronomer ist, das an seinem Ende eine Methylmethacrylgruppe aufweist.

8. Ein Verfahren zur Herstellung eines Elektrophoreseelementes, bei dem auf einer Stuetzschicht eine ein Methylmethacrylmakromonomerderivat enthaltende Zwischenschicht und auf der Zwischenschicht eine ein Mittel fuer die Elektrophorese enthaltende, waessrige Polyacrylamidgelschicht durch Polymerisation mit Netzverbindungen einer Acrylamidverbindung und einer Netzverbindungen bildenden Substanz in der Gegenwart von Wasser und einer Verbindung, die mindestens eine als Modifikationsmittel dienende Carbamoylgruppe enthaelt, gebildet wird.

9. Das Verfahren zur Herstellung eines Elektrophoreseelementes nach Anspruch 8, wobei diese ein Mittel fuer eine Elektrophorese enthaltende Schicht ein wasserloesliches Polymer und Agarose enthaelt.

10. Das Verfahren zur Herstellung eines Elektrophoreseelementes nach Anspruch 8, wobei die als Modifikationsmittel dienende Verbindung Urea oder Formamid ist.

11. Das Verfahren zur Herstellung eines Elektophoreseelementes nach Anspruch 8, wobei das Methylmethacrylmakromonomerderivat ein an seinen Enden eine Methylmethacrylgruppe aufweisendes Methylmethacrylmakromonomer ist.